# FASCICULE DE BREVET EUROPEEN

(11) **EP 2 628 371 B1**
(45) Date de publication et mention de la délivrance du brevet: **24.05.2017**
(21) Numéro de dépôt: 11779754.8
(22) Date de dépôt: 28.09.2011
(51) Int. Cl.: H05K 7/20, G06F 1/20

(54) **DISSIPATEUR THERMIQUE POUR MODULE D'EXTENSION INTERCHANGEABLE CONNECTÉ À UNE CARTE INFORMATIQUE**
KÜHLKÖRPER FÜR EIN AN EINE COMPUTERPLATINE ANGESCHLOSSENES AUSWECHSELBARES EXPANSIONSMODUL
HEAT SINK FOR AN INTERCHANGEABLE EXPANSION MODULE CONNECTED TO A COMPUTER BOARD

(30) Priorité: 13.10.2010 FR 1058352
(43) Date de publication de la demande: 21.08.2013
(73) Titulaire: Bull SAS, 78340 Les Clayes-sous-Bois (FR)
(72) Inventeur: DEMANGE, Fabien, 78300 Poissy (FR); DEPRET, Nicolas, 1170 Watermaael-Boitsfort (BE)
(74) Mandataire: Santarelli
(86) Numéro de dépôt international: PCT/FR2011/052265
(87) Numéro de publication internationale: WO 2012/049395

(56) Documents cités:
- WO-A1-2010/126499
- US-A1- 2008 013 282
- US-A1- 2008 174 965
- US-A1- 2010 085 712

## Description

L'invention concerne une carte informatique comportant au moins un module d'extension interchangeable et au moins un dissipateur thermique associé audit au moins un module d'extension interchangeable.

Dans le domaine des systèmes informatiques en général, on connaît des systèmes ayant une architecture à base de cartes informatiques, aussi appelée lames, insérées dans des boîtiers, aussi appelés châssis. Chaque carte informatique porte un certain nombre de composants informatiques tels que des modules d'extension interchangeables comme des barrettes mémoire et/ou des interfaces d'entrée/sortie comme une carte réseau.

Comme ces modules d'extension interchangeables sont pourvus de composants électroniques qui chauffent en fonctionnement, ces modules ont besoin d'être refroidis pour assurer leur bon fonctionnement et leur durabilité.

Une solution proposée par certains fabriquant de modules d'extension interchangeables est d'agencer sur chacun de ces derniers un dissipateur thermique à air dit intégré, plutôt que de fournir des modules nus, c'est-à-dire sans dissipateur intégré. Le problème est que ces dissipateurs à air intégrés nécessitent d'être dans un environnement avec écoulement d'air forcé et, en outre, ils peuvent ne pas suffire au refroidissement des modules.

On connaît aussi des solutions dans lesquelles des dissipateurs thermiques à liquide sont agencés autour des modules d'extension interchangeables, avec ces dissipateurs qui sont pour la plupart montés à demeure sur les modules et qui présentent en outre des conduites d'entrée et de sortie du liquide de refroidissement, lesquelles conduites sont agencées sur une tranche supérieure des modules d'extension. Le problème de ces dissipateurs à liquide est qu'ils ont, en particulier du fait des conduites d'entrée et de sortie, un encombrement supérieur à celui des modules. Par conséquent, l'ensemble formé par un de ces modules et par le dissipateur à liquide qui lui est associé présente un encombrement, et en particulier une hauteur, ne respectant pas les contraintes de compacité qui, dans le domaine des systèmes informatiques, sont de plus en plus élevées.

On sait en outre que dans un lot de modules d'extension interchangeables, il est fréquent, voire systématique, qu'un certain nombre de modules ne fonctionnent pas une fois connectés aux cartes informatiques. Le cas échéant, et comme ces modules, dit modules rebuts, sont généralement sous garantie, ils peuvent être renvoyés à leur fabricant. Or, dans le cas où ces modules sont associés à des dissipateurs à air ou à liquide qui sont montés à demeure sur ces modules associés, le renvoi de ces derniers est impossible puisqu'ils ne sont plus dans la même configuration qu'à leur livraison. Cela pose donc des problèmes de maintenabilité.

On connaît également de la demande de brevet américain US 2010/085712 un système de traitement de l'information pourvu d'une carte informatique, de composants électroniques dont des modules d'extension interchangeables pourvus chacun de dissipateurs thermique, d'une plaque froide dans laquelle chemine un liquide de refroidissement et d'une structure de montage. La carte informatique est pourvue de moyens de fixation configurés pour recevoir les modules d'extension. Les dissipateurs thermiques sont disposés autour de chacun des modules. La plaque froide est disposée sur les dissipateurs, à l'opposé des moyens de fixation et la structure de montage recouvre partiellement la plaque froide et est fixée à la carte informatique par l'intermédiaire de deux jambes.

On connaît en outre des demandes de brevet américain US 2008/013282 et US 2008/174965 des dissipateurs thermiques pour modules d'extension interchangeables pourvus de dispositif de transfert de chaleur.

Il existe donc un besoin de fournir un dissipateur thermique pour module d'extension interchangeable qui soit performant, peu encombrant et qui permet au module d'extension interchangeable d'être renvoyé à son fabricant en cas de dysfonctionnement, notamment lorsqu'il est sous garantie. L'invention vise à fournir une carte informatique telle que définie dans la revendication 1.

L'invention a ainsi pour objet, un dissipateur thermique pour module d'extension interchangeable connecté à une carte informatique, ladite carte ayant au moins un module de refroidissement dans laquelle chemine un fluide de refroidissement et au moins un premier connecteur électrique, ledit module d'extension ayant au moins un deuxième connecteur électrique configuré pour être connecté audit au moins un premier connecteur électrique de ladite carte et au moins une surface d'échange thermique, ledit dissipateur comportant au moins un dispositif de transfert de chaleur configuré pour être placé de manière amovible contre ladite surface d'échange dudit module d'extension, lequel au moins un dit dispositif est en outre configuré de telle sorte qu'il est en contact thermique avec ledit module de refroidissement de ladite carte et fixé mécaniquement de manière amovible audit module de refroidissement de ladite carte lorsque ledit module d'extension est connecté à ladite carte.

Le dispositif de transfert de chaleur du dissipateur thermique selon l'invention étant adapté à être placé contre la surface d'échange du module d'extension interchangeable, il permet de capter une grande quantité de chaleur produite par des composants électroniques de ce module d'extension au niveau de cette surface d'échange. En outre, comme ce dispositif de transfert de chaleur est adapté à être en contact thermique avec le module de refroidissement de la carte informatique lorsque le module d'extension est lui-même connecté à cette carte, la chaleur captée par le dispositif de transfert de chaleur peut être transférée vers le module de refroidissement de la carte informatique via ce dispositif de transfert de chaleur. Ainsi, le dispositif de transfert de chaleur du dissipateur thermique selon l'invention est particulièrement performant et peut suffire en lui-même pour assurer le refroidissement du module d'extension, afin de garantir à ce dernier une durabilité élevée.

En outre, le fait que le dispositif de transfert de chaleur du dissipateur selon l'invention soit adapté à être placé contre ladite surface d'échange et adapté à être en contact thermique avec le module de refroidissement de la carte informatique permet à ce dissipateur de ne pas avoir besoin d'un système d'écoulement d'un liquide de refroidissement tout autour du module d'extension, contrairement à certaines solutions de l'état de la technique. Ainsi, les problèmes d'encombrement liés par exemple aux conduites d'entrée et de sortie d'un liquide des solutions connues sont évités.

On observera aussi que le dispositif de transfert de chaleur du dissipateur thermique selon l'invention est adapté à être placé de manière amovible contre la surface d'échange du module d'extension et fixé également de manière amovible à la carte informatique. De ce fait, le dissipateur thermique selon l'invention, qui est adapté à être associé à au moins un module d'extension, est totalement retirable, autrement dit amovible, par rapport à la fois au module d'extension et à la carte informatique. De cette manière, si l'on s'aperçoit que le module d'extension interchangeable, une fois connecté à la carte informatique, ne fonctionne pas, il peut aisément être remis dans sa configuration d'origine (soit nu, soit avec dissipateur thermique à air intégré) et ainsi être renvoyé sous garantie à son fabricant.

Le dissipateur thermique selon l'invention permet donc à la fois un refroidissement efficace du ou des modules d'extension interchangeables auxquels il est adapté à s'associer, dans un encombrement respectant des contraintes de compacité et tout en fournissant un niveau de maintenabilité particulièrement commode et économique.

De préférence, le dissipateur selon l'invention comporte en outre une interface thermique prise en sandwich entre ledit dispositif de transfert de chaleur et ladite surface d'échange thermique dudit module d'extension. Cette interface thermique, qui peut avoir une forme adaptée au dispositif de transfert de chaleur ou au module d'extension interchangeable, permet un transfert de chaleur des composants électroniques du module d'extension vers le dispositif de transfert de chaleur de manière encore plus performante.

Selon un exemple de mise en oeuvre de l'invention particulièrement préféré, le dissipateur comporte deux dits dispositifs de transfert de chaleur configurés pour prendre en sandwich au moins un dit module d'extension interchangeable, l'un des deux dits dispositifs de transfert de chaleur étant configuré pour être placé de manière amovible contre une dite surface d'échange d'un dit au moins un module d'extension ou en contact thermique avec ledit module de refroidissement de ladite carte et fixé mécaniquement de manière amovible à ladite carte lorsque ledit au moins un module d'extension est connecté à ladite carte, et l'autre des deux dits dispositifs de transfert de chaleur étant configuré pour être en contact thermique avec ledit module de refroidissement de ladite carte et fixé mécaniquement de manière amovible à ladite carte lorsque ledit au moins un module d'extension est connecté à ladite carte ou placé de manière amovible contre une dite surface d'échange d'un dit au moins un module d'extension.

On observera qu'entre les deux dispositifs de transfert de chaleur du dissipateur selon l'invention, il peut y être pris en sandwich un ou plusieurs modules d'extension interchangeables.

Selon une caractéristique préférée, simple, commode et économique du dissipateur selon l'invention, ce dernier comporte deux dits dispositifs de transfert de chaleur et des pièces de liaisons configurées de telle sorte que les deux dits dispositifs de transfert de chaleur sont situés à une distance prédéterminée et constante l'un de l'autre.

Ainsi, les deux dispositifs de transfert de chaleur sont standards, c'est-à-dire qu'ils peuvent prendre en sandwich un ou plusieurs modules d'extension interchangeables, lesquels peuvent avoir des tailles différentes, en particulier des épaisseurs différentes. Entre ces deux dispositifs de transfert de chaleur, il peut aussi bien y avoir un module d'extension interchangeable d'un certain type, par exemple nu, ou un module d'extension interchangeable d'un autre type, par exemple avec un dissipateur à air intégré. La variation de taille, et en particulier d'épaisseur, est compensée notamment par la taille, et en particulier l'épaisseur, de l'interface thermique disposée entre le dispositif de transfert de chaleur et la surface d'échange thermique.

Selon une caractéristique préférée qui permet notamment au dissipateur selon l'invention de présenter un encombrement minimum afin de respecter les contraintes de compacité, ledit au moins un dispositif de transfert de chaleur présente une hauteur prédéterminée inférieure ou égale à la hauteur dudit module d'extension.

Selon encore des caractéristiques préférées, simples, commodes et économiques du dissipateur selon l'invention :
- le dissipateur comporte deux dits dispositifs de transfert de chaleur et des moyens de positionnement configurés pour former un espace adapté à recevoir au moins un dit module d'extension, ledit espace ayant un contour délimité formé au moins partiellement par les deux dits dispositifs de transfert de chaleur et par lesdits moyens de positionnement ;
- le dissipateur comporte deux dits dispositifs de transfert de chaleur configurés pour être agencés en vis-à-vis, lesquels deux dits dispositifs de transfert de chaleur sont identiques ; et
- le dissipateur comporte deux dits dispositifs de transfert de chaleur pourvus chacun d'au moins une patte de raccordement, lesquelles pattes de raccordement sont configurées pour être raccordées entre elles, en contact thermique avec ledit module de refroidissement et fixées mécaniquement ensemble de manière amovible à ladite carte informatique lorsque ledit au moins un module d'extension est connecté à ladite carte, avec au moins une desdites pattes de raccordement qui est configurée pour être placée contre ledit module de refroidissement.

L'invention vise donc à fournir, une carte informatique comportant au moins un module de refroidissement dans laquelle chemine un fluide de refroidissement, au moins un premier connecteur électrique, au moins un module d'extension interchangeable ayant au moins un deuxième connecteur électrique configuré pour être connecté audit au moins un premier connecteur électrique de ladite carte, et au moins un dissipateur thermique tel que décrit ci-dessus.

Selon une caractéristique préférée, simple, commode et économique de la carte selon l'invention, cette dernière comporte au moins un troisième connecteur électrique, au moins un processeur ayant au moins un quatrième connecteur électrique configuré pour être connecté audit au moins un troisième connecteur électrique de ladite carte et au moins une surface d'échange thermique ; et au moins un autre dissipateur thermique dédié audit au moins un processeur, ledit au moins un autre dissipateur thermique étant configuré pour être à la fois placé de manière amovible contre la surface d'échange thermique dudit processeur, en contact thermique avec ledit module de refroidissement et fixé mécaniquement de manière amovible à ladite carte lorsque ledit au moins processeur est connecté à ladite carte.

Ainsi, la carte informatique selon l'invention comporte non seulement des dissipateurs thermiques dédiés aux modules d'extension interchangeables de la carte informatique mais également d'autres dissipateurs thermiques dédiés aux processeurs de cette même carte informatique. Chacun de ces dissipateurs thermiques est amovible relativement à l'élément auquel il est associé (module d'extension interchangeable ou processeur) afin de rendre possible simplement la maintenabilité.

On va maintenant poursuivre l'exposé de l'invention par la description d'exemples de réalisation, donnés ci-après à titre illustratif et non limitatif, en référence aux dessins annexés sur lesquels :
- la figure 1 est une vue en perspective d'une carte informatique selon un premier mode de réalisation de l'invention ;
- la figure 2 est une vue en perspective montrant partiellement et isolément un dissipateur thermique pour un module d'extension interchangeable connecté à la carte informatique ;
- les figures 3 et 4 sont des vues en perspective du dissipateur thermique associé à un module d'extension interchangeable, respectivement dans un état non assemblé et dans un état assemblé ;
- les figures 5 et 6 sont des vues partielles en plan de la carte informatique respectivement sans module d'extension interchangeable et avec un module d'extension interchangeable connecté à cette carte ;
- la figure 7 est une vue en perspective isolée d'un dissipateur thermique dédié à un processeur connecté à la carte informatique ;
- la figure 8 est une vue partielle en perspective de la carte informatique, sans module d'extension interchangeable, et avec le processeur connecté à la carte et le dissipateur thermique associé à ce processeur ; et
- les figures 9 et 10 sont des vues en perspective d'un dissipateur thermique associée à un autre module d'extension interchangeable selon un deuxième mode de réalisation de l'invention, respectivement dans un état non assemblé et dans un état assemblé.

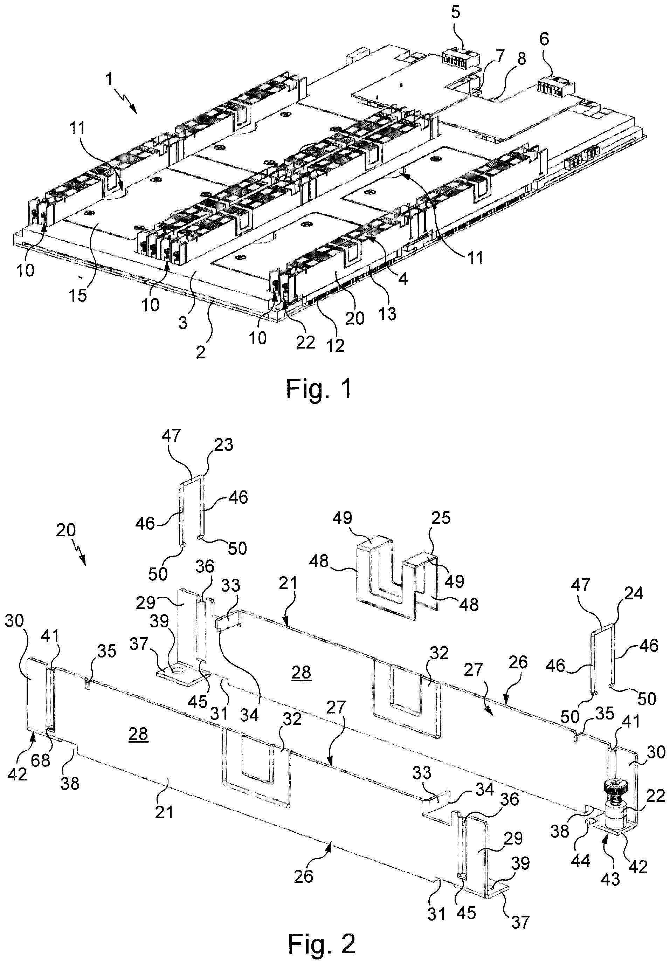

Comme visible plus particulièrement en figure 1, une carte informatique 1 selon l'invention, aussi appelée lame, pour système informatique est dimensionnée pour être insérée dans un boîtier de système informatique (non représenté).

Cette carte informatique 1 comporte un circuit imprimé 2, un module de refroidissement 3 ayant la forme générale d'une plaque s'étendant sur une majeure partie du circuit imprimé 2 et des composants formés ici par des modules d'extension interchangeables, et en particulier des barrettes mémoire 4, et des processeurs (non visibles sur cette figure).

La carte informatique 1 comporte en outre deux connecteurs électriques 5 et 6 disposés sur un côté de cette carte 1. Ces connecteurs électriques 5 et 6 sont destinés à coopérer avec des connecteurs électriques complémentaires disposés dans le boîtier de système informatique (non représentés) pour assurer le raccordement électrique.

Le module de refroidissement, aussi appelé plaque froide 3, est monté fixement sur le circuit imprimé 2 et comporte des canaux de circulation d'un fluide de refroidissement liquide ou gazeux (non représentés) qui débouchent sur des conduites d'entrée et de sortie 7 et 8 pour respectivement l'entrée et la sortie du fluide de refroidissement, lequel fluide est adapté à cheminer dans les canaux de cette plaque froide 3 pour le refroidissement à la fois du circuit imprimé 2 et des éléments qui y sont connectés.

La plaque froide 3 présente en outre des ouvertures 10 et 11 traversantes au niveau de son épaisseur de telle manière que ces ouvertures 10 et 11 débouchent de part et d'autre de cette plaque froide 3.

Les ouvertures 10 sont situées au niveau du contour et en position centrale de la plaque froide 3 et sont adaptées à recevoir les barrettes mémoire 4 pour leurs mises en place sur le circuit imprimé 2.

Les ouvertures 11 de la plaque froide 3 sont disposées entre les ouvertures 10 qui se trouvent au niveau du contour de cette plaque froide 3 et les ouvertures 10 qui sont plutôt centrales et sont adaptées à recevoir les processeurs pour leurs mises en place sur le circuit imprimé 2.

Le circuit imprimé 2 comporte des connecteurs électriques 12 adaptés à être connectés électriquement aux barrettes mémoires 4 via des pattes de connexion 13 que ces barrettes 4 comportent.

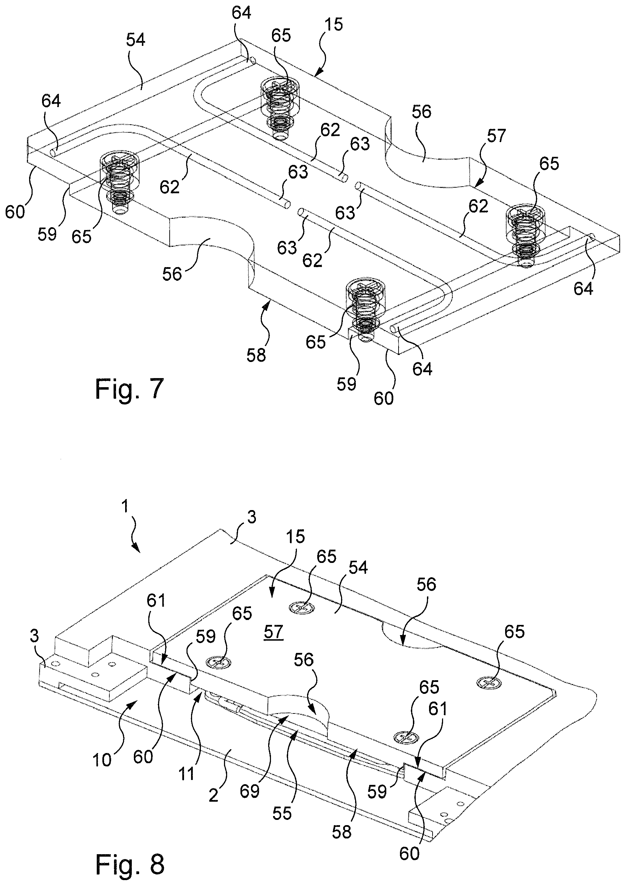

La carte informatique 1 comporte en outre des dissipateurs thermiques 20 associés chacun à une barrette mémoire 4, ainsi que des dissipateurs thermiques 15 associés chacun à un processeur 55 (visible figure 8).

La figure 2 illustre le dissipateur thermique 20 associé à la barrette mémoire 4.

Ce dissipateur 20 est pourvu de deux plaques latérales métalliques 21 de transfert de chaleur, de deux moyens de fixation 22 (dont l'un seulement est visible à la figure 2) de ces plaques métalliques 21 sur la plaque froide 3 et de trois pièces de liaison 23 à 25 des deux plaques métalliques 21 entre elles.

Les plaques 21 de transfert de chaleur sont ici en cuivre et sont formées en une seule pièce.

Les plaques 21 de transfert de chaleur ont chacune une forme générale rectangulaire avec une face externe 26 et une face interne 27.

Ces plaques métalliques 21 de transfert de chaleur présentent chacune une première portion 28 formant ici la majeure partie de cette plaque et des deuxième et troisième portions respectivement 29 et 30 prolongeant les premières portions 28 à leurs extrémités.

Chaque plaque 21 de transfert de chaleur présente des décrochements 31 et 38 sur une tranche inférieure de cette plaque 21 de transfert de chaleur au niveau des raccordements entre les premières portions 28 et les portions 29 et 30 respectives.

Chaque première portion 28 est en outre pourvue d'une déformation 32 formée par exemple par emboutissage de ces premières portions 28 des plaques 21 de transfert de chaleur.

Ces déformations 32 sont formées sensiblement au centre sur la longueur de ces premières portions 28 et ont la forme d'un U qui débouche sur une tranche supérieure de ces plaques 21 de transfert de chaleur.

Plus précisément, ces déformations sont formées de telle manière qu'elles forment un creux sur la face externe 26 de chaque plaque 21 et une bosse sur la face interne 27 de chaque plaque 21.

Les premières portions 28 comportent également des protrusions 33 formant des pièces de liaison des plaques 21 et des moyens de positionnement de la barrette mémoire 4 entre ces plaques 21.

Ces protrusions 33 sont au niveau de la tranche supérieure de chaque plaque 21 et à proximité de chaque deuxième portion 29. Ces protrusions 33 sont réalisées par une découpe en L de longueur prédéterminée de chaque plaque 21 de transfert de chaleur, avec ces protrusions qui sont ensuite pliées pour se retrouver dans une direction perpendiculaire par rapport à la direction générale de chaque plaque 21 de transfert de chaleur.

En outre, les protrusions 33 présentent une échancrure 34 à leur extrémité libre.

Chaque première portion 28 est également pourvue d'une fente 35 ménagée sur la tranche supérieure de chaque plaque 21 de transfert de chaleur à proximité de chaque troisième portion 30.

Ces fentes sont ménagées de telle sorte qu'elles peuvent accueillir l'extrémité d'une protrusion 33 se trouvant en regard, avec le fond de chaque encoche 35 qui sert de support à un bord d'une protrusion 33 respective, lequel bord est formé du fait de l'échancrure 34 respective.

Chaque deuxième portion 29 est pourvue d'une gorge 36 s'étendant transversalement par rapport à la direction générale des plaques 21 de transfert de chaleur, avec cette gorge qui débouche à la fois au niveau de la tranche supérieure de chaque plaque 21 et dans des trou 45 formés dans les deuxièmes portions 29.

Chaque deuxième portion 29 présente en outre une patte de raccordement 37 ayant un orifice 39 en son centre. Chaque patte 37 forme une extension de la deuxième portion 29 respective, cette extension s'étendant horizontalement et perpendiculairement par rapport à la direction générale de chaque plaque 21 de transfert de chaleur.

Les troisièmes portions 30 sont pourvues chacune d'une gorge 41 similaire aux gorges 36 formées sur les troisièmes portions 30, c'est-à-dire qui débouche à la fois au niveau de la tranche supérieure de chaque plaque 21 et dans des trous 68 formés dans les troisièmes portions 30.

Les troisièmes portions 30 sont pourvues chacune en outre d'une patte de raccordement 42 ayant un orifice 43 en son centre, ces pattes 42 étant similaires aux pattes de raccordement 37 qui s'étendent à partir des deuxièmes portions 29, à la différence près que chaque patte 42 comporte en outre un ergot 44 formant butée.

Les pattes de raccordement 37 et 42 formées sur chaque plaque 21 de transfert de chaleur sont décalées selon un plan horizontal grâce au fait que les décrochements 31 et 38 ne sont pas identiques. En effet, le décrochement 38 est plus important que le décrochement 31 de telle sorte que la patte de raccordement 42 de chaque plaque 21 est dans un premier plan horizontal qui se trouve au dessus d'un second plan horizontal dans lequel se trouve la patte de raccordement 37 de chaque plaque 21.

Les moyens de fixation 22 sont formés par des vis à ressort captives connues qui sont pourvues d'une tête, d'une tige qui s'étend à partir de la tête, d'un manchon dans lequel est reçu la tige et d'un ressort intercalé entre la tête et le manchon et agencé autour de la tige. Ces vis de fixation 22 sont adaptées à être disposées sur les pattes de raccordement 42, lesquelles sont adaptées, comme nous le verrons par la suite plus en détail, à être superposées avec une patte de raccordement 37 d'une plaque 21 de transfert de chaleur se trouvant en vis à vis, avec les pattes de raccordement 37 qui se trouvent en dessous des pattes de raccordement 42 et les orifices 39 et 43 étant centrés.

Les pièces de liaison 23 et 24 sont identiques et ont la forme de circlips rectangulaires à trois branches dont deux branches 46 sont adaptées à être insérées dans les gorges 36 et 41 des deuxième et troisième portions respectives 29 et 30, et l'autre branche 47 rejoignant les deux branches 46 au niveau des tranches supérieures des plaques 21 comme nous le verrons par la suite plus en détail. Ces circlips 23 présentent en outre deux pointes 50 aux extrémités libres des branches 46, avec ces pointes 50 qui sont adaptées à être bloquées dans les trous 45 et 68 des deuxième et troisième portions respectives 29 et 30 de deux plaques 21 en vis à vis.

La pièce de liaison 25, qui est centrale, présente deux branches 48 en forme de U et deux autres branches 49 rejoignant deux à deux les extrémités hautes des deux branches 48. Comme nous le verrons par la suite plus en détail, cette pièce de liaison 25 est adaptée à être insérée dans les déformations 32 de deux plaques 21 de transfert de chaleur.

Les pièces de liaisons 23, 24 et 25 ont un espacement sensiblement identique de telle manière que le dissipateur présente une distance prédéterminée constante entre chaque plaque 21 une fois le dissipateur 20 associé à la barrette mémoire 4.

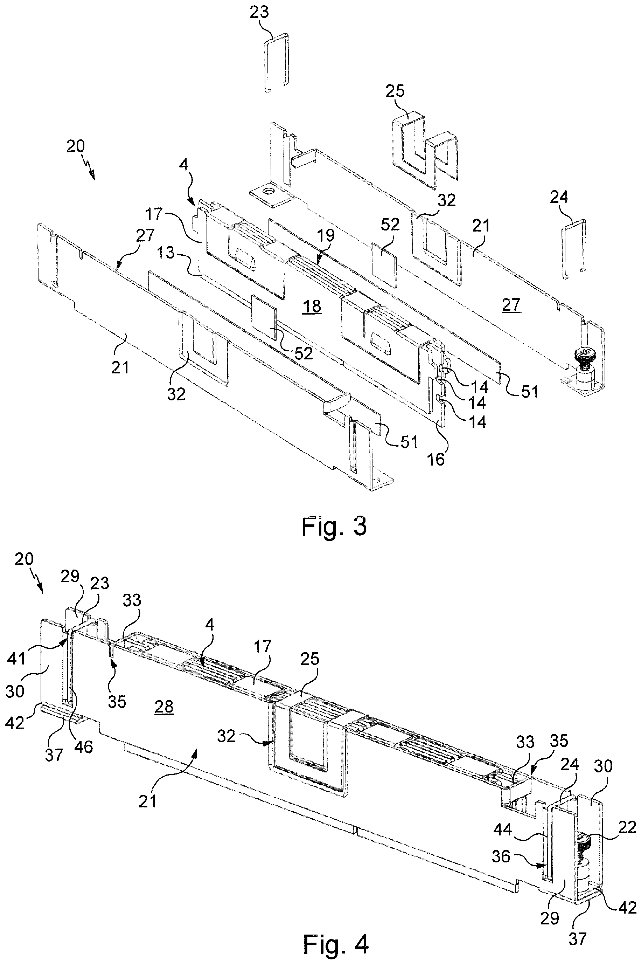

La figure 3 illustre le dissipateur 20 au complet et une barrette mémoire 4, les deux étant dans un état non assemblé.

La barrette mémoire 4 est pourvue d'un circuit 16 sur lequel sont implantés des composants électroniques, au moins sur l'une de ces faces latérales.

La barrette représentée sur la figure 3 est en outre fournie avec un dissipateur thermique à air intégré 17 qui enveloppe au moins partiellement ce circuit 16.

Cette barrette mémoire 4 est livrée par son fabricant telle qu'elle est représentée sur la figure 3.

Comme les composants électroniques qui sont montés sur cette barrette mémoire 4 chauffent en fonctionnement, cette barrette mémoire 4 présente deux surfaces d'échange thermique 18 et 19 opposées.

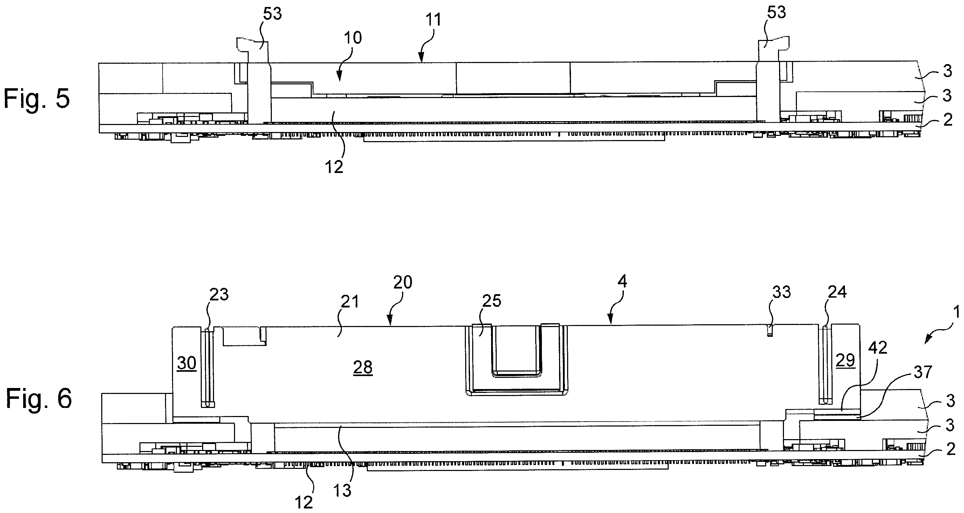

La barrette mémoire 4 comporte des moyens de retenue 14 de celle-ci sur le circuit imprimé 2 comme cela sera décrit plus en détails à la figure 6.

Le dissipateur thermique 20 comporte, en plus des éléments décrits en figure 2, des interfaces thermiques 51 et 52 formées chacune d'un bloc de patte thermique souple, laquelle patte est au moins partiellement durcie pour garder sensiblement sa forme de départ tout en restant compressible.

Les blocs 51 de patte thermique ont une forme rectangulaire et sont adaptés à être pris en sandwich entre, respectivement, une partie basse de la surface d'échange thermique 18 de la barrette mémoire 4 et une partie basse de la face interne 27 d'une plaque 21 de transfert de chaleur, et une partie basse de la surface d'échange thermique 19 de la barrette mémoire 4 et une partie basse de la face interne d'une autre plaque 21 de transfert de chaleur.

De la même manière, les blocs de patte thermique 52 respectifs ont une forme rectangulaire, type carré, et sont adaptés à être pris en sandwich entre, respectivement, une partie haute de la surface d'échange thermique 18 de la barrette mémoire 4 et une partie haute de la face interne de la plaque 21, cette dernière partie haute se trouvant en réalité coincée dans la déformation 32 en U, et une partie haute de la surface d'échange thermique 19 de la barrette mémoire 4 et une partie haute de la face interne 27 de l'autre plaque 21, avec cette dernière partie haute se trouvant en réalité coincée dans la déformation 32 en U de cette plaque 21.

Les deux plaques 21 de la figure 3 sont donc rapprochées l'une de l'autre jusqu'à prendre en sandwich la barrette mémoire 4 et les blocs de patte thermique respectifs 51 et 52.

Ces blocs de pattes thermiques 51 et 52 ont chacun une épaisseur prédéterminée qui est liée à l'épaisseur de la barrette mémoire 4 afin que l'ensemble soit pris en sandwich entre les deux plaques 21, avec un taux de compression satisfaisant de ces blocs 51 et 52.

Dans cette position, illustrée à la figure 4, les extrémités des protrusions 33 de chaque plaque 21 sont reçues dans les fentes respectives de ces plaques 21 et les pattes de raccordement 42 et 37 se superposent, avec chaque patte 42 se trouvant au dessus de chaque patte 37 dans une position où les ergots 44 des pattes 42 viennent en butée contre un bord latéral d'une patte 37 respective afin d'assurer l'alignement des orifices 39 et 43 respectifs.

La coopération entre les fentes 35 et les protrusions 33 permet de former un espace dont le contour est délimité par ces protrusions 33 et les portions 28 de chaque plaque 21, assurant ainsi un positionnement prédéterminé et un bon maintien de la barrette mémoire 4 dans cet espace.

Dans cette position également, les circlips 23 et 24 sont assemblés sur chacune des plaques 21 de telle manière que les branches 46 des circlips 23 et 24 sont insérées dans les gorges 36 et 41 respectives et les pointes 50 introduites dans les trous 45 et 68 respectifs.

Ainsi, les deuxième et troisième portions respectives 29 et 30 se trouvent en regard deux à deux sont situées à une distance prédéterminée et constante l'une de l'autre et leur maintien est assuré.

La pièce de liaison 25 est également montée sur chacune des plaques 21 de manière à ce que les portions en U 48 soient insérées dans les déformations 32 respectives des plaques 21, et avec les portions 49 de cette pièce de liaison 25 qui sont posées sur un bord supérieur de la barrette mémoire 4, la maintenant ainsi à l'intérieur de l'espace dont le contour est délimité.

Les portions en U 48 facilitent en outre le maintien en compression des blocs de pattes thermiques respectives 51 et 52 pris en sandwich entre la barrette mémoire 4 et les plaques 21, afin d'assurer un transfert de chaleur optimal de la barrette mémoire 4 vers les plaques métalliques 21 via les blocs de pattes thermiques 51 et 52.

Dans l'état assemblé, l'espacement constant entre les deux plaques 21 de transfert de chaleur est assuré à la fois par les protrusions 33, les circlips 23 et 24 et la pièce de liaison 25.

Dans cet état assemblé, les vis de fixation 22 sont insérées entre des deuxièmes et troisièmes portions 29 et 30 respectives.

On voit aussi dans cet état assemblé que les deux plaques 21 de transfert de chaleur, qui sont identiques, ont une hauteur prédéterminée sensiblement inférieure, ou égale, à la hauteur de la barrette mémoire 4.

Les figures 5 et 6 illustrent la carte informatique, vue partiellement en plan, respectivement sans la barrette mémoire 4 et son dissipateur thermique associé 20 et avec la barrette mémoire 4 et son dissipateur thermique associé 20.

Sur la figure 5 sont illustrés des organes d'encliquetage 53 de la barrette mémoire 4 sur le circuit imprimé 2, avec ces organes 53 qui coopèrent avec les moyens de retenue 14 formés sur la barrette mémoire 4 une fois celle-ci connectée électriquement via son connecteur électrique 13 qui s'insèrent dans le connecteur électrique 12 du circuit imprimé 2.

Pour son assemblage, l'ensemble formé par la barrette mémoire 4 et le dissipateur thermique 20 associé à cette barrette 4 est introduit dans l'ouverture 10 illustrée sur la figure 5.

Une fois la barrette mémoire connectée électriquement, les pattes de raccordement 37 de chaque plaque 21 de transfert de chaleur se trouvent placées contre la plaque froide 3, avec interposition ou non d'un bloc de patte thermique supplémentaire (non représenté) entre ceux-ci pour favoriser encore plus le transfert de chaleur.

L'ensemble formé par le dissipateur thermique 20 et la barrette mémoire 4 associée est alors fixé à cette plaque froide 3 par l'intermédiaire de chaque tige issue de chaque vis de fixation 22. Dans le cas où un bloc supplémentaire de patte thermique est pris en sandwich entre chaque patte de raccordement 37 et la plaque froide 3, alors ce bloc supplémentaire est percé en son centre pour le passage de la tige de la vis de fixation 22.

Le même ensemble composé d'un dissipateur thermique 20 et d'une barrette mémoire 4 est formé et la même fixation est réalisée pour les seize barrettes mémoire 4 visibles sur la figure 1, chacun de ces ensembles ayant une longueur et une épaisseur constantes, autrement dit un encombrement identique.

Les figures 7 et 8 montrent respectivement un dissipateur thermique 15 dédié au processeur 55, de manière isolée, et la carte informatique 1, sans barrette mémoire ni dissipateur thermique associé à cette barrette mémoire, mais avec le processeur 55 monté sur le circuit imprimé 2, partiellement entouré par la plaque froide 3 et associé à son dissipateur 15.

Le processeur 55 est introduit dans l'ouverture 11 créée dans la plaque froide 3.

Ce processeur 55 comporte un connecteur électrique (non représenté) adapté à être connecté à un autre connecteur électrique de la carte 1 (non représenté). Ce processeur 55 chauffe en fonctionnement et présente ainsi une surface d'échange thermique 69 sur le dessus.

Le dissipateur thermique 15 dédié à ce processeur 55 est monté au dessus de ce processeur 55, sur sa surface d'échange thermique 69, et est reçu entièrement dans l'ouverture 11 jusqu'à être à fleur avec la face supérieure de la plaque froide 3.

Ce dissipateur thermique 15 comporte une plaque métallique 54 ayant une forme sensiblement parallélépipédique et rectangulaire. Les découpes 56 sont formées sur deux grands côtés de la plaque 54 pour sa préhension.

En outre, cette plaque 54 présente une face supérieure 57 et une face inférieure 58, laquelle face inférieure 58 est pourvue de deux décrochements 59 formant des tranches inférieures 60 adaptées à être placées contre des parois 61 de la plaque froide 3.

La plaque 54 comporte en outre quatre caloducs 62, aussi appelés « heat pipes » en anglais, montés à l'intérieur de cette plaque 54, lesquels caloducs 62 sont disposés dans la plaque 54 de telle sorte qu'ils présentent chacun une extrémité 63 située plutôt au centre de cette plaque 54, autrement dit au niveau de la partie chaude du processeur 55, et une autre extrémité 64 opposée à l'extrémité 63 au niveau chacune d'un coin de la plaque 54, autrement dit à proximité de la plaque froide 3.

Ainsi, les extrémités respectives 63 des caloducs 62 sont adaptées à capter la chaleur produite par le processeur 55 associé au dissipateur 15, laquelle chaleur est transférée vers chaque extrémité respective 64 du caloduc respectif 62 pour transférer cette chaleur vers la plaque froide 3.

Le dissipateur 15 comporte en outre quatre moyens de fixation 65 formés par des vis à ressort bien connues (proches de celles utilisées pour le dissipateur thermique 20), ces moyens 65 étant fixés directement sur un support du processeur 55, lequel support est posé sur le circuit imprimé 2.

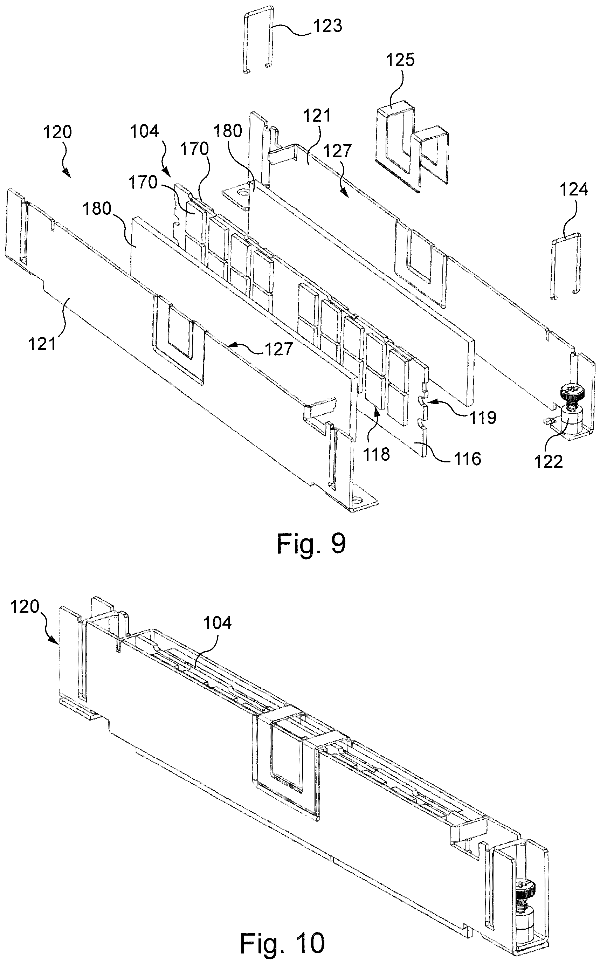

Les figures 9 et 10 illustrent un deuxième mode de réalisation du dissipateur thermique selon l'invention.

D'une manière générale on a employé pour les éléments similaires les mêmes références mais additionnées du nombre 100.

A la différence de l'ensemble formé par le dissipateur 20 et la barrette mémoire 4 illustrés sur les figures 1 à 8, la barrette mémoire 104 illustrée sur les figures 9 et 10 est nue, c'est-à-dire dépourvue de dissipateur à air intégré. Cette barrette mémoire 104 présente des composants électroniques 170 de part et d'autre de son circuit 116 formant ainsi deux surfaces d'échange thermique 118 et 119 opposées.

Ici, la barrette mémoire 104 présente une épaisseur inférieure à celle de la barrette mémoire 4.

Le dissipateur thermique 120 comporte des plaques métalliques de transfert de chaleur 121 en cuivre en tout point identique aux plaques métalliques de transfert de chaleur 21 du premier mode de réalisation.

Ce dissipateur 120 comporte en outre des pièces de liaison 123, 124 et 125 en tout point identique aux pièces de liaison 23, 24 et 25 illustrées sur les figures 1 à 8.

Ainsi, les encombrements respectifs des dissipateurs thermiques 20 et 120 sont identiques, et en particulier la distance entre deux plaques de transfert de chaleur respective 21 et 121, autrement dit leur écartement, est identique lorsque l'ensemble formé par ces dissipateurs respectifs 20 et 121 et par les barrettes mémoire respectives 4 et 104 est assemblé, comme cela est visible respectivement en figures 4 et 10.

Le dissipateur thermique 120 comporte une interface thermique formée par un seul bloc de patte thermique 180, lequel bloc 180 présente une épaisseur supérieure aux blocs de patte thermique 51 et 52 illustrés sur la figure 3, ceci afin de compenser la différence d'épaisseur de la barrette mémoire 104 par rapport à la barrette mémoire 4.

Bien entendu, l'interface thermique 180 peut être formée de plusieurs blocs.

Comme les blocs de patte thermique 51 et 52 illustrés sur la figure 3, le bloc de patte thermique 180 illustré sur la figure 9 est relativement souple de manière à permettre une compression importante entre les faces internes 127 respectives des deux plaques 121 et les surfaces d'échange thermique respectives 118 et 119.

Le dissipateur thermique 120 comporte en outre, identiquement au dissipateur thermique 20 illustré sur les figures 1 à 8, des moyens de fixation 122 formés par des vis de fixation à ressort.

L'ensemble formé par le dissipateur 120 et la barrette mémoire 104 est, comme l'ensemble formé par le dissipateur 20 et la barrette mémoire 4, adapté à être monté sur une carte informatique (non représentée) similaire à la carte informatique 1 illustrée en figure 1.

L'assemblage du dissipateur 120 et de la barrette mémoire 104 est réalisé de la même manière que l'assemblage du dissipateur 20 avec la barrette mémoire 4.

En outre, l'assemblage de la barrette mémoire 104 et du dispositif 120 sur la carte informatique, et en particulier sur la plaque froide, est réalisé de la même manière que dans le premier mode de réalisation.

Dans des variantes non illustrées :
- les plaques de transfert de chaleur sont dans un autre matériau que le cuivre, par exemple en aluminium ;
- les interfaces thermiques, au lieu d'être sous forme de patte, sont sous forme de graisse ;
- ces interfaces thermiques ont des formes et des tailles standards adaptées à être utilisées pour différents types de barrettes mémoire. Par exemple, ces interfaces thermiques ont une forme générale sensiblement rectangulaire, avec une épaisseur variant par exemple d'environ 1 mm à environ 3mm, et le taux de compression admissible pour ces interfaces thermiques est de l'ordre d'environ 1% à environ 55% une fois prise en sandwich entre les plaques de transfert de chaleur et les barrettes mémoires.

Dans encore une variante non illustrée, le dissipateur thermique prend en sandwich plusieurs barrettes mémoire, avec entre chaque barrette mémoire une interface thermique interposée, ou pas, suivant que la barrette mémoire présente une ou deux surfaces d'échange thermique (c'est-à-dire qu'elle comporte des composants électroniques sur une face ou deux faces). Par exemple, le dissipateur comporte notamment deux dispositifs de transfert de chaleur prenant en sandwich deux barrettes mémoires, ou plus, ayant chacune des composants électroniques sur une seule face, et par conséquent ayant chacune une seule surface d'échange thermique, avec ces deux barrettes ou plus qui sont agencées tête-bêche l'une par rapport à l'autre et sans interface thermique interposée entre elles. Par exemple encore, le dissipateur comporte notamment deux dispositifs de transfert de chaleur prenant en sandwich deux barrettes mémoires, ou plus, ayant chacune des composants électroniques sur deux faces, et par conséquent ayant chacune deux surfaces d'échange thermique, deux interfaces thermiques supplémentaires interposées entre les deux barrettes, chacune de ces interfaces supplémentaires étant placée contre une surface d'échange d'une barrette respective, et au moins une plaque intermédiaire de transfert de chaleur interposée entre ces deux interfaces thermiques supplémentaires, avec cette plaque intermédiaire qui est reliée à au moins un des deux dispositifs de transfert de chaleur pour être en contact thermique avec la plaque froide.

Dans encore une autre variante non illustrée, la carte informatique comporte une interface d'entrée/sortie telle que par exemple une carte réseau à la place ou en plus d'un module d'extension interchangeable et un dissipateur thermique configuré pour être associé à cette interface d'entrée/sortie.

On rappelle plus généralement que l'invention ne se limite pas aux exemples décrits et représentés.

## Revendications

1. Carte informatique comportant un circuit imprimé (2), au moins un module de refroidissement (3) dans lequel chemine un fluide de refroidissement, au moins un premier connecteur électrique (12), au moins un module d'extension interchangeable (4 ; 104) présentant au moins une surface d'échange thermique (18, 19 ; 118, 119) et ayant au moins un deuxième connecteur électrique (13) configuré pour être connecté audit au moins un premier connecteur électrique (12) de ladite carte (1), et au moins un dissipateur thermique (20; 120) comportant au moins un dispositif de transfert de chaleur (21 ; 121) configuré pour être placé de manière amovible contre ladite surface d'échange (18, 19 ; 118, 119) dudit module d'extension (4 ; 104) et en contact thermique avec ledit module de refroidissement (3) de ladite carte (1) ; ladite carte (1) étant **caractérisée en ce que** ledit module de refroidissement (3) est directement monté fixement sur ledit circuit imprimé (2) de ladite carte (1), et ledit dispositif (21 ; 121) est directement fixé mécaniquement de manière amovible audit module de refroidissement (3) de ladite carte (1) lorsque ledit module d'extension (4 ; 104) est connecté à ladite carte (1).

2. Carte selon la revendication 1, dans laquelle ledit dissipateur comporte en outre une interface thermique (51, 52 ; 180) prise en sandwich entre ledit dispositif de transfert de chaleur (21 ; 121) et ladite surface d'échange thermique (18, 19 ; 118, 119) dudit module d'extension (4 ; 104).

3. Carte selon l'une des revendications 1 et 2, dans laquelle ledit dissipateur comporte deux dits dispositifs de transfert de chaleur (21 ; 121) configurés pour prendre en sandwich au moins un dit module d'extension interchangeable (4 ; 104), l'un des deux dits dispositifs de transfert de chaleur (21 ; 121) étant configuré pour être placé de manière amovible contre une dite surface d'échange (18, 19 ; 118, 119) d'un dit au moins un module d'extension (4 ; 104) ou en contact thermique avec ledit module de refroidissement (3) de ladite carte (1) et fixé mécaniquement de manière amovible à ladite carte (1) lorsque ledit au moins un module d'extension (4 ; 104) est connecté à ladite carte (1), et l'autre des deux dits dispositifs de transfert de chaleur (21 ; 121) étant configuré pour être en contact thermique avec ledit module de refroidissement (3) de ladite carte (1) et fixé mécaniquement de manière amovible à ladite carte (1) lorsque ledit au moins un module d'extension (4 ; 104) est connecté à ladite carte (1) ou placé de manière amovible contre une dite surface d'échange (18, 19 ; 118 , 119) d'un dit au moins un module d'extension (4 ; 104).

4. Carte selon l'une quelconque des revendications 1 à 3, dans laquelle ledit dissipateur comporte deux dits dispositifs de transfert de chaleur (21 ; 121) et des pièces de liaisons (23, 24, 25, 33 ; 123, 124, 125) configurées de telle sorte que les deux dits dispositifs de transfert de chaleur (21 ; 121) sont situés à une distance prédéterminée et constante l'un de l'autre.

5. Carte selon l'une quelconque des revendications 1 à 4, dans laquelle ledit au moins un dispositif de transfert de chaleur (21 ; 121) présente une hauteur prédéterminée inférieure ou égale à la hauteur dudit module d'extension (4 ; 104).

6. Carte selon l'une quelconque des revendications 1 à 5, dans laquelle ledit dissipateur comporte deux dits dispositifs de transfert de chaleur (21 ; 121) et des moyens de positionnement (33) configurés pour former un espace adapté à recevoir au moins un dit module d'extension (4; 104), ledit espace ayant un contour délimité formé au moins partiellement par les deux dits dispositifs de transfert de chaleur (21 ; 121) et par lesdits moyens de positionnement (33).

7. Carte selon l'une quelconque des revendications 1 à 6, dans laquelle ledit dissipateur comporte deux dits dispositifs de transfert de chaleur (21 ; 121) configurés pour être agencés en vis-à-vis, lesquels deux dits dispositifs de transfert de chaleur (21 ; 121) sont identiques.

8. Carte selon l'une quelconque des revendications 1 à 7, dans laquelle ledit dissipateur comporte deux dits dispositifs de transfert de chaleur (21 ; 121) pourvus chacun d'au moins une patte de raccordement (37, 42), lesquelles pattes de raccordement (37, 42) sont configurées pour être raccordées entre elles, en contact thermique avec ledit module de refroidissement (3) et fixées mécaniquement ensemble de manière amovible à ladite carte informatique (1) lorsque ledit au moins un module d'extension (4 ; 104) est connecté à ladite carte (1), avec au moins une desdites pattes de raccordement (37, 42) qui est configurée pour être placée contre ledit module de refroidissement (3).

9. Carte selon l'une quelconque des revendications 1 à 8, comportant au moins un troisième connecteur électrique, au moins un processeur (55) ayant au moins un quatrième connecteur électrique configuré pour être connecté audit au moins un troisième connecteur électrique de ladite carte (1) et au moins une surface d'échange thermique (69), et au moins un autre dissipateur thermique (15) dédié audit au moins un processeur (55), ledit au moins un autre dissipateur thermique (15) étant configuré pour être à la fois placé de manière amovible contre la surface d'échange thermique (69) dudit processeur (55), en contact thermique avec ledit module de refroidissement (3) et fixé mécaniquement de manière amovible à ladite carte (1) lorsque ledit au moins processeur (55) est connecté à ladite carte (1).

## Patentansprüche

1. Computerplatine, mit einer gedruckten Schaltung (2), mindestens einem Kühlmodul (3), in dem ein Kühlfluid strömt, mindestens einem ersten elektrischen Steckverbinder (12), mindestens einem austauschbaren Erweiterungsmodul (4; 104), das mindestens eine Wärmeaustauschfläche (18, 19; 118, 119) aufweist und mindestens einen zweiten elektrischen Steckverbinder (13) umfasst, der für die Verbindung mit dem mindestens einen ersten elektrischen Steckverbinder (12) der Platine (1) ausgeführt ist, und mit mindestens einem Kühlkörper (20; 120), der mindestens eine Wärmeübertragungsvorrichtung (21; 121) umfasst, die so ausgeführt ist, dass sie abnehmbar an der Austauschfläche (18, 19; 118, 119) des Erweiterungsmoduls (4; 104) angeordnet ist und mit dem Kühlmodul (3) der Platine (1) in thermischen Kontakt steht, wobei die Platine (1) **dadurch gekennzeichnet ist, dass** das Kühlmodul (3) feststehend direkt an der gedruckten Schaltung (2) der Platine (1) angebracht ist und die Vorrichtung (21; 121) mechanisch abnehmbar direkt am Kühlmodul (3) der Platine (1) befestigt ist, wenn das Erweiterungsmodul (4; 104) mit der Platine (1) verbunden ist.

2. Platine nach Anspruch 1, wobei der Kühlkörper außerdem eine Wärmeschnittstelle (51, 52; 180) aufweist, die sandwichartig zwischen der Wärmeübertragungsvorrichtung (21; 121) und der Wärmeaustauschfläche (18, 19; 118, 119) des Erweiterungsmoduls (4; 104) angeordnet ist.

3. Platine nach einem der Ansprüche 1 und 2, wobei der Kühlkörper zwei der Wärmeübertragungsvorrichtungen (21; 121) umfasst, die dazu ausgeführt sind, zumindest ein austauschbares Erweiterungsmodul (4; 104) sandwichartig aufzunehmen, wobei eine der beiden Wärmeübertragungsvorrichtungen (21; 121) so ausgeführt ist, dass sie abnehmbar an einer Austauschfläche (18, 19; 118, 119) des mindestens einen Erweiterungsmoduls (4; 104) angeordnet ist oder mit dem Kühlmodul (3) der Platine (1) in thermischen Kontakt steht und mechanisch abnehmbar an der Platine (1) befestigt ist, wenn das mindestens eine Erweiterungsmodul (4; 104) mit der Platine (1) verbunden ist, und die andere der beiden Wärmeübertragungsvorrichtungen (21; 121) so ausgeführt ist, dass sie mit dem Kühlmodul (3) der Platine (1) in thermischen Kontakt steht und mechanisch abnehmbar an der Platine (1) befestigt ist, wenn das mindestens eine Erweiterungsmodul (4; 104) mit der Platine (1) verbunden ist, oder abnehmbar an einer Austauschfläche (18, 19; 118, 119) des mindestens einen Erweiterungsmoduls (4; 104) angeordnet ist.

4. Platine nach einem der Ansprüche 1 bis 3, wobei der Kühlkörper zwei der Wärmeübertragungsvorrichtungen (21; 121) und Verbindungsteile (23, 24, 25, 33; 123, 124, 125) umfasst, die so ausgeführt sind, dass die beiden Wärmeübertragungsvorrichtungen (21; 121) in einem vorbestimmten und konstanten Abstand zueinander liegen.

5. Platine nach einem der Ansprüche 1 bis 4, wobei die mindestens eine Wärmeübertragungsvorrichtung (21; 121) eine vorbestimmte Höhe hat, die geringer ist als die Höhe des Erweiterungsmoduls (4; 104) oder dieser entspricht.

6. Platine nach einem der Ansprüche 1 bis 5, wobei der Kühlkörper zwei der Wärmeübertragungsvorrichtungen (21; 121) und Positioniermittel (33) umfasst, die zur Bildung eines Raums ausgeführt sind, der dazu geeignet ist, zumindest ein Erweiterungsmodul (4; 104) aufzunehmen, wobei der Raum eine begrenzte Kontur aufweist, die zumindest teilweise durch die beiden Wärmeübertragungsvorrichtungen (21; 121) und die Positioniermittel (33) gebildet ist.

7. Platine nach einem der Ansprüche 1 bis 6, wobei der Kühlkörper zwei der Wärmeübertragungsvorrichtungen (21; 121) umfasst, die dazu ausgeführt sind, einander gegenüber angeordnet zu sein, wobei die beiden Wärmeübertragungsvorrichtungen (21; 121) identisch sind.

8. Platine nach einem der Ansprüche 1 bis 7, wobei der Kühlkörper zwei der Wärmeübertragungsvorrichtungen (21; 121) umfasst, die jeweils mit mindestens einer Anschlusslasche (37, 42) versehen sind, wobei die Anschlusslaschen (37, 42) so ausgeführt sind, dass sie aneinander angeschlossen sind, mit dem Kühlmodul (3) in thermischen Kontakt stehen und zusammen mechanisch abnehmbar an der Computerplatine (1) befestigt sind, wenn das mindestens eine Erweiterungsmodul (4; 104) mit der Platine (1) verbunden ist, wobei mindestens eine der Anschlusslaschen (37, 42) für die Anordnung am Kühlmodul (3) ausgeführt ist.

9. Platine nach einem der Ansprüche 1 bis 8, mit mindestens einem dritten elektrischen Steckverbinder, mindestens einem Prozessor (55), der zumindest einen vierten elektrischen Steckverbinder aufweist, der zur Verbindung mit dem mindestens einen dritten elektrischen Steckverbinder der Platine (1) ausgeführt ist, sowie mindestens eine Wärmeaustauschfläche (69), und mit mindestens einem weiteren Kühlkörper (15), der dem mindestens einen Prozessor (55) zugeordnet ist, wobei der mindestens eine weitere Kühlkörper (15) so ausgeführt ist, dass er gleichzeitig abnehmbar an der Wärmeaustauschfläche (69) des Prozessors (55) angeordnet ist, mit dem Kühlmodul (3) in thermischen Kontakt steht und mechanisch abnehmbar an der Platine (1) befestigt ist, wenn der mindestens eine Prozessor (55) mit der Platine (1) verbunden ist.

## Claims

1. A computer board comprising a printed circuit (2), at least one cooling module (3) in which passes a cooling fluid, at least one first electrical connector (12), at least one interchangeable expansion module (4 ; 104) having at least one heat exchange surface (18, 19; 11, 110) and having at least one second electrical connector (13) configured to be connected to said at least one first electrical connector (12) of said board (1), and at least one heat sink (20 ; 120) comprising at least one heat-transfer device (21 ; 121) configured to be placed removably against said exchange surface (18, 19; 118, 119) of said expansion module (4 ; 104) and in thermal contact with said cooling module (3) of said board (1); said board (1) being **characterized in that** said cooling module (3) is directly mounted securely on said printed circuit (2) of said card (1), and said device (21; 121) is directly mechanically fastened removably to said cooling module (3) of said board (1) when said expansion module (4 ; 104) is connected to said board (1).

2. A board according to claim 1, wherein said sink further comprises a thermal interface (51, 52 ; 180) sandwiched between said heat-transfer device (21 ; 121) and said heat exchange surface (18, 19 ; 118, 119) of said expansion module (4 ; 104).

3. A board according to one of claims 1 and 2, wherein said sink comprises two said heat-transfer devices (21 ; 121) configured to sandwich at least one said interchangeable expansion module (4 ; 104), one of the two said heat-transfer devices (21 ; 121) being configured to be removably placed against a said exchange surface (18, 19 ; 118, 119) of a said at least one expansion module (4 ; 104) or in thermal contact with said cooling module (3) of said board (1) and removably fastened mechanically to said board (1) when said at least one expansion module (4 ; 104) is connected to said board (1), and the other of the two said heat-transfer devices (21 ; 121) being configured to be in thermal contact with said cooling module (3) of said board (1) and removably fastened mechanically to said board (1) when said at least one expansion module (4 ; 104) is connected to said board (1) or removably placed against a said exchange surface (18, 19 ; 118, 119) of a said at least one expansion module (4 ; 104).

4. A board according to any one of claims 1 to 3, wherein said sink comprises two said heat-transfer devices (21; 121) and linking parts (23, 24, 25, 33 ; 123, 124, 125) configured such that the two said heat-transfer devices (21 ; 121) are situated at a predetermined and constant distance from each other.

5. A board according to any one of claims 1 to 4, wherein said at least one heat-transfer device (21 ; 121) is of a predetermined height less than or equal to the height of said expansion module (4 ; 104).

6. A board according to any one of claims 1 to 5, wherein said sink comprises two said heat-transfer devices (21 ; 121) and positioning means (33) configured to form a space adapted to receive at least one said expansion module (4 ; 104), said space having a delimited contour formed at least partially by the two said heat-transfer devices (21 ; 121) and by said positioning means (33).

7. A board according to any one of claims 1 to 6, wherein said sink comprises two said heat-transfer devices (21 ; 121) configured to be arranged facing each other, which said two heat-transfer devices (21 ; 121) are identical.

8. A board according to any one of claims 1 to 7, wherein said sink comprises two said heat-transfer devices (21 ; 121) each provided with at least one linking lug (37, 42), which linking lugs (37, 42) are configured to be linked together, in thermal contact with said cooling module (3) and removably fastened mechanically together to said computer board (1) when said at least one expansion module (4 ; 104) is connected to said board (1), at least one of said linking lugs (37, 42) being configured to be placed against said coolng module (3).

9. A board according to any one of claims 1 to 8, comprising at least one third electrical connector, at least one processor (55) having at least one fourth electrical connector configured to be connected to said at least one third electrical connector of said board (1) and at least one heat exchange surface (69), and at least one other heat sink (15) dedicated to said at least one processor (55), said at least one other heat sink (15) being configured to be at the same time placed removably against the heat exchange surface (69) of said processor (55) in thermal contact with said cooling module (3) and removably fastened mechanically to said board (1) when said at least one processor (55) is connected to said board (1).
